# EUROPEAN PATENT SPECIFICATION

(11) **EP 2 177 484 B1**
(45) Date of publication and mention of the grant of the patent: **02.05.2018**
(21) Application number: 09173253.7
(22) Date of filing: 16.10.2009
(51) Int. Cl.: C03B 37/05, C03B 37/07

(54) **Method for optimizing the manufacturing process of mineral fibres**
Verfahren zur Optimierung der Herstellung von Mineralfasern
Procédé d'optimisation de la production de fibres minérales

(30) Priority: 17.10.2008 FI 20085980
(43) Date of publication of application: 21.04.2010
(73) Proprietor: Paroc Group Oy, 00181 Helsinki (FI)
(72) Inventor: Lindgren, Tommy, 20540 Turku (FI); Walli, Bjarne, 21600 Parainen (FI); Åstrand, Erik, 21600 Parainen (FI); Olausson, Christian, 53132 Lidköping (SE)
(74) Representative: Berggren Oy, Turku

(56) References cited:
- WO-A1-91/19684
- WO-A2-2004/000742

## Description

The present invention relates to a method for optimising the manufacturing process of mineral fibres according to the preambles of the claims below.

Mineral wool, such as stone wool, is made by melting suitable raw materials, for example diabase, limestone or slag in a melting furnace. The obtained mineral melt is discharged from the melting furnace in the form of a melt jet to a fiberising apparatus, where the melt is formed into mineral fibres. Normally a fiberising apparatus of the spinning machine type is used, which comprises a series of rotating fiberising rotors or spinning rotors, typically 3-4 rotors. Mineral melt from the melting furnace is directed towards the mantle surface of the first rotor where it gets hold of the rotor's mantle surface to a certain extent before it is thrown out as a drop cascade towards the mantle surface of the adjacent second rotor in the series. A part of the mineral melt then gets sufficient hold of the mantle surface of the second rotor in order to there be formed into fibres due to the effect of the centrifugal force. Another part of the mineral melt is thrown onwards from the mantle surface of the second rotor towards the mantle surface of the third rotor. In this way the mineral melt is "transported" as a jet of melt drops or a drop cascade, successively from one rotor to the subsequent one through the whole fiberising apparatus, while a part of the mineral melt is formed into mineral fibres at the individual rotors. A binder may be applied on the formed mineral fibres, either during the fibre formation or after it.

The mineral fibres formed at the fiberising rotors are transported away from the fiberising apparatus by means of blowing off. The blowing off of mineral fibres may be arranged by so-called primary blow-off means, which have been placed at the peripheries of the rotors, or with secondary blow-off means, which have been arranged at a distance from the fiberising apparatus. The mineral fibres are transported from the fiberising apparatus through a collecting chamber towards a collecting means, which has been arranged in front of the fiberising apparatus. The collecting means may be, for example, a belt conveyor or a rotating drum.

In order to provide an even primary fibre web of a desired quality it is desirable to be able to control the fiberising process at the fiberising apparatus as well as possible. It is desirable to observe changes in the fiberising conditions as soon as possible in order to be able to react to them and possibly counteract them.

WO 99/42413 shows a method where melt feeding is observed by a video camera. The video camera monitors the melt jet from the melting furnace and its impact point on the mantle surface of the first rotor. If the impact point moves on the rotor surface, the melt container is moved according to the data received through the video camera. With this method no information is however obtained about the distribution of the melt amount between the different fiberising rotors in the fiberising apparatus itself. If the amount of melt is divided in an unfavourable manner between the different fiberising rotors, it may lead to fibres of poor quality or increased generation of shot, which means a lower efficiency in the process.

EP 1515921 shows a method where the ratio between the torque of two fiberising rotors is observed. If the observed ratio differs from a determined target value, the melt feeding point on the first rotor and/or its rotating speed and/or its position in relation to the subsequent fiberising rotor is changed. The torque is however not a directly measurable unit, but it must be calculated mathematically, which easily leads to a certain loss of information. The torque also does not give information about how the melt feeding works.

WO9119684 A1 teaches a method for optimizing the manufacturing process of mineral fiber mats by measuring the power consumption of the spinning wheels of the fiberising apparatus and regulating the speed of the conveyor belt for the obtained fiber mat accordingly. Therefore the object of this invention is to provide a method for the manufacture of mineral wool fibres where the above-mentioned disadvantages are minimised.

The object is thus to provide a method with which a comprehensive view of the fiberising process can be obtained in real-time.

Another object for the present invention is to provide a method which make possible a quick reaction to changes in the fiberising process.

These objects are attained with a method having the characteristics presented in the characterising part of the independent claim below.

A typical method according to the present invention is defined in claim 1. In the method, inter alia,
- mineral melt is fed in the form of a melt jet to a fiberising apparatus, which comprises a number of rotating fiberising rotors, which are rotated by motor means, whereby the melt is fed to a first rotor of the fiberising apparatus towards an application point on the first rotor's mantle surface,
- the feeding of the mineral melt to the first rotor is monitored by a monitoring means, such as a camera, in order to obtain feeding information,
- a part of the mineral melt is thrown out from the mantle surface of the first rotor in the form of a drop cascade towards a mantle surface of a second rotor,
- a first part of mineral melt is formed into fibres at the second rotor and is blown off from the rotor by blow-off means, and a second part of mineral melt is thrown out from the second rotor in the form of a drop cascade towards a third rotor, where at least a part of the melt is formed into fibres and are blown off by blow-off means,
- slip of at least two of the motor means of the fiberising rotors in the fiberising apparatus is measured,
- the measured slip values are compared to each other in order to obtain one or more melt division value(s),
- the melt division value or values are used together with the feeding information for altering or adjusting at least one of the process parameters of the fiberising apparatus.

A typical arrangement comprises
- a fiberising apparatus, which comprises a number of rotating fiberising rotors, which have been arranged to rotate by motor means,
- a melt feeding means,
- a monitoring means, such as a camera, for monitoring the feeding of the mineral melt to the first rotor of the fiberising apparatus, in order to obtain feeding information,
- blow-off means, which have been arranged by the active rotor surfaces of the fiberising apparatus, where a first part of mineral melt is formed into fibres, for blowing off the formed fibres from the rotors,
- measuring means for measuring slip of at least two of the motor means of the fiberising rotor of the fiberising apparatus, and
- comparison means for comparing the measured slip values to each other and for obtaining one or more melt division value(s).

Now is has surprisingly been found out that by using both the visual information obtained about the feeding of the melt jet and the directly measurable slip information obtained from the motor means of the fiberising rotors it is possible to provide a much more accurate understanding about the entire fibre formation process. With the present invention is simultaneously obtained valuable information about both the melt feeding and the distribution of the melt amount between the fiberising rotors and about the circumstances at the fiberising rotors. This improved overview makes it easier to optimise the fiberising process and quickly and effectively counteract possible changes which occur during fiberising or melt feeding.

The present invention makes possible an active tool for a comprehensive control of the fiberising process. When information is received both about the melt feeding and the melt distribution between the fiberising rotors, it is easier to see a connection in complicated phenomena where both factors are involved. It is also possible to observe disturbances where the first factor, e.g. the melt feeding functions without problems, but the second factor, the melt distribution, is unsatisfactory. Such problems have escaped attention in the known systems.

According to the present invention the melt feeding to the mantle surface of the first rotor is monitored with a monitoring means in order to obtain feeding information. When the melt jet hits the mantle surface of the rotor a first part of melt gets a hold on the surface of the rotor and a second part is thrown in the form of a drop cascade towards the mantle surface of the second rotor. The melt angle, which is formed between the melt jet and the drop cascade, is preferably monitored with the monitoring means. The size of this angle affects the strength, with which the drop cascade is thrown from the first rotor to the second rotor.

With the monitoring means is also monitored where on the rotor surface the melt application point is located. Sometimes the melt application point may start to "travel" on the rotor surface, i.e. the melt jet from the melting furnace or the melt trough does not constantly hit the same location on the rotor surface, but moves to another location. This can be caused for example by deposits at the trough end. The "travelling" of the melt application point may lead to the melt starting to splash at the application point, which deteriorates the fiberising process. If the monitoring means observes that splashing occurs, or that a melt angle has changed in a negative way, the application point of the melt jet may be altered.

The feeding information obtained with the present invention thus comprises information about
- where on the rotor surface the melt application point is located,
- the melt angle between the melt jet from the furnace/feeding trough and the drop cascade from the first to the second rotor,
- the amount of melt thrown from the first rotor to the subsequent second rotor, and/or
- possibly occurring melt splashing.

According to an embodiment of the present invention the monitoring means may be a process monitoring camera or an industrial camera, meant for applications where high temperatures occur. The camera is preferably small in size and has zoom, scanning and tilting properties, which makes possible a good view over a large area. The camera may have a protection of quartz glass in front of the lens and the actual camera housing may be cooled, e.g. with air blown through the camera housing or with a cooling liquid circulating in the walls of the camera housing. A thermal camera may also be used as a monitoring means. IR radiation, which the fed melt emits as heat, may be observed with the thermal camera. Information about the temperature of the melt and possible temperature changes is also obtained with the thermal camera, which information may further be used for monitoring the fiberising process. After all, the temperature of the melt influences the viscosity of the melt, which in turn influences the length and other properties of the formed fibres. As a monitoring camera the thermal camera gives a lot of information, since it can observe the process at a long distance even in difficult conditions, e.g. in the dark, or through fire or smoke.

The monitoring means sends the obtained visual information to a computer program, which comprises processing means for processing the information. The visual information, such as the pictures, is preferably sent continuously to the processing means, whereafter it is analysed with suitable analysing means for analysing visual information. After the analysis the visual information may be stored a certain determined time in a database before it is removed. With the obtained analysis values control signals may be sent to change the position of the melt trough.

According to the present invention slip of at least two of the motor means of the fiberising rotors is measured. Slip is a quantity which indicates the difference between the motor frequency and the rotor frequency. The greater the slip, the more melt there ought to be on the rotor surface. The rotor frequency indicates how fast the fiberising rotor rotates, unit Hz, and it is obtained from the control unit of the fiberising rotor. The motor frequency indicates the frequency, with which the frequency converter controls the operating speed of the electric motor. The measured slip values are compared to each other in order to obtain a melt division value, which gives information about how the mineral melt is distributed between at least two of the fiberising rotors in a fiberising apparatus.

The melt division value is then used together with the feeding information for altering or adjusting at least one of the process parameters of the fiberising apparatus. Typical parameters that may be adjusted when needed are for example the rotating speed of the fiberising rotors, the blow-off speed and/or blow-off angle of the blow-off means, the collecting speed of the collecting means, the volume of the fed melt jet, and the application point of the melt jet on the mantle surface of the first rotor.

According to an embodiment of the present invention the application point of the melt jet on the mantle surface of the first rotor is altered based on the obtained feeding information and the melt division value or values. The application point is altered on the mantle surface of the first rotor so that an optimal melt angle is obtained and the splash formation is minimised. Preferably the melt application point lies in an area of the fiberising rotor's mantle surface, which is cooled. The alteration of the application point may be monitored with the aid of monitoring means. Optimisation of the application point improves the quality of the produced mineral fibres and reduces the amount of waste, which is generated in the process. In this way an improved productivity is obtained.

According to another embodiment of the present invention the rotating speed of one or more fiberising rotors and/or the blow-off speed of one or more blow-off means is altered based on the obtained feeding information and melt division value or values. Especially if the fiberising process is not got under control by changing the melt application point on the mantle surface of the first rotor, but problems with splashing and uneven melt distribution remain, the rotating speed may be altered at one or more of the fiberising rotors of the fiberising apparatus. Typically the rotating speed may be decreased or increased by 5 %, more typically by 10 %, sometimes even by 15 %. In a corresponding manner, the blow-off speed may even be decreased or increased by 5 %, more typically by 10 %, sometimes even by 15 %.

According to the present invention it is possible to obtain information about how the melt amount is divided between the different fiberising rotors in the fiberising apparatus. Since the measured slip values are directly proportional to the amount of melt on the surface of the individual fiberising rotor, direct information about the amount of melt at different fiberising rotors is obtained. This information has previously not been accessible. According to a preferred embodiment the slip of the motor means is measured at the first and the fourth rotor. Information is then obtained about how high the melt is situated in the fiberising apparatus. The more melt there is on the first and the second fiberising rotor, the better the fibre formation is, both qualitatively and quantitatively.

According to an embodiment the slip of the motor means is measured at all the rotors of the fiberising apparatus. In this way accurate and important information may be obtained about the fiberising process at the different fiberising rotors and about the melt division between the different rotors.

According to an embodiment of the present invention the mineral melt expelled from the lower part of the fiberising apparatus in the form of shot may be monitored in order to obtain shot information, which is then used for altering or adjusting one or more fiberising parameters. Then a second monitoring means, such as a camera, may be arranged to monitor the lower part of the fiberising apparatus, especially the space between the third and the fourth rotor in a fiberising apparatus with four fiberising rotors. Usually unfiberised melt is expelled in the form of small hard particles, so-called shot, particularly from the lower part of the fiberising apparatus. This shot is undesirable in the process, as it deteriorates the quality of the final product and influences the production rate of the fiberising apparatus in a negative way. By visually monitoring the amount of shot which is generated and the point where they are generated their formation may be counteracted by altering the process parameters, such as the rotating speed and/or the blow-off speed at the different rotors. The second monitoring means may be similar to the first monitoring means.

It is also possible to arrange a third monitoring means, such as a camera, immediately after the collecting means, to monitor the quality and thickness of the formed primary web from its first side. Thus the thickness of the collected primary web is monitored in order to obtain information, which is then used for altering or adjusting one or more fiberising parameters. A light source may be arranged on the second side of the primary web. In this way it is possible to monitor with the aid of the third monitoring means if there are thicker sites in the formed primary web. These thicker sites are seen as darker and can usually be associated with the fact that the fibre formation at one or more of the rotors is disturbed or does not function in an optimal manner. The information obtained from the third monitoring means may be used for altering at least one fiberising parameter at the fiberising apparatus in order to obtain an even and thin primary web. The position of the melt trough in relation to the mantle surface of the first rotor can for example be changed, whereby the melt jet hits the mantle surface. The third monitoring means may be similar to the first monitoring means.

The described invention is especially suited for use in the manufacture of mineral fibres, where mineral melt is fed to a fiberising apparatus of cascade type. The fiberising apparatus usually comprises a series of rotating fiberising or spinning rotors, typically 3-4 rotors. The rotors usually rotate around a horizontal axis. Mineral melt from the melting furnace is directed towards the mantle surface of the first rotor where it gets a certain hold of the rotor's mantle surface before it is thrown out as a cascade of drops towards the mantle surface of the adjacent second rotor in the series. A part of the mineral melt then gets sufficient hold of the mantle surface of the second rotor in order to be formed into fibres due to the effect of the centrifugal force. Another part of the mineral melt is thrown onwards towards the mantle surface of the third rotor. In this way the mineral melt is "transported" as a jet of melt drops or a drop cascade, successively from one rotor to the subsequent one through the whole fiberising apparatus, while a part of the mineral melt is formed into mineral fibres. A binder may be applied on the formed mineral fibres, either during the fibre formation or after it. The mineral fibres formed at the fiberising rotors are transported away from the fiberising apparatus by means of blowing off. The blowing off of mineral fibres may be arranged by so-called primary blow-off means, which have been placed at the peripheries of the rotors or with secondary blow-off means, which have been arranged at a distance from the fiberising apparatus. The mineral fibres are transported from the fiberising apparatus through a collecting chamber towards a collecting means, which has been arranged in front of the fiberising apparatus. The collecting means can for example be a belt conveyor or a rotating drum.

In this context the active rotor surface of the fiberising rotor is defined as that part of the periphery of the fiberising rotor where mineral fibres are formed from the mineral melt located on the surface of the rotor while the rotor is rotating. Mineral fibres are generally defined as that weight fraction of the binderless fibre material which passes through a 32 µm sieve.

The present invention is advantageously suited for use with fiberising apparatuses that comprise fiberising rotors, which are provided with magnetic bearing. Such fiberising apparatuses and rotors are described for example in WO9015032 and WO9210435. Very accurate information about the rotating speed of the rotor may be obtained from the magnetic bearing of the fiberising rotor, and thus also more accurate information about the melt division value of the rotor.

Some preferred embodiments of the invention are described in more detail below with reference to the enclosed figures, in which

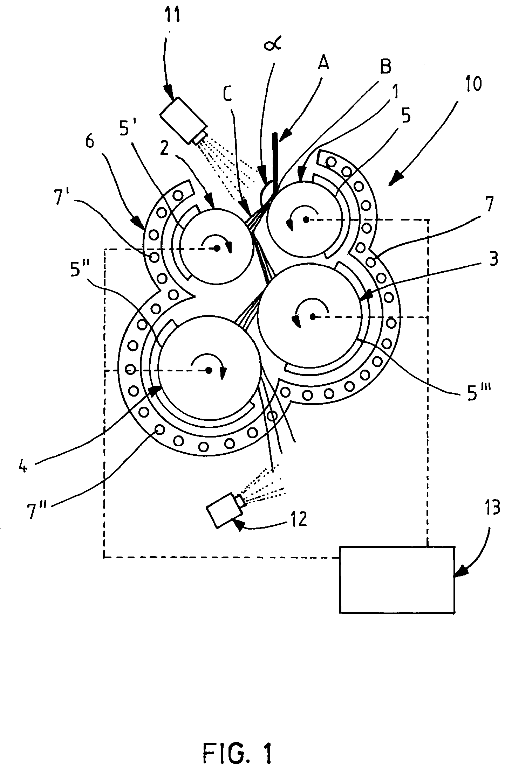

Figure 1 shows schematically an embodiment according to the present invention.

Figure 1 shows schematically an embodiment according to the present invention. Melt is fed from a furnace (not shown) in the form of a melt jet A to the mantle surface of the first fiberising rotor 1 in a fiberising apparatus 10. The melt jet hits the mantle surface in a melt application point B. A part of the melt gets a hold of the mantle surface of the first rotor, and the rest is thrown out in the form of a drop cascade C towards the mantle surface of the second rotor 2. The melt application point and the angle α between the melt jet A and the drop cascade C are monitored with a monitoring camera 11.

A part of the melt is formed into fibres on the mantle surface of the second fiberising rotor 2 and the rest of the melt is thrown out towards the mantle surface of the third fiberising rotor 3. There a part of the melt is again formed into fibres and the rest of the melt is thrown towards the mantle surface of the fourth fiberising rotor 4. The last part of the melt which is not formed into fibres at the fourth rotor 4 is removed from the fiberising apparatus 10 from the space between the third and fourth rotor 3, 4 in the form of a spray of coarser material. This spray can be monitored with a second monitoring camera 12.

The shafts of all the fiberising rotors 1, 2, 3, 4 are connected to a computer 13 for analysing the melt distribution between the different rotors in the fiberising apparatus 10. Motor frequency and rotor frequency data is obtained from each fiberising rotor, whereby a slip value is calculated for each rotor. In order to obtain one or more melt division values, which describe the melt distribution between the different rotors, at least two slip values for two rotors are compared to each other by the comparison means of the computer. Depending on the obtained result the melt application point B on the mantle surface of the first rotor 1 or the blow-off speed of the blow-off means 5, 5', 5", 5''' can be altered. The blow-off means 5, 5', 5", 5''' produce gas streams, with which the fibres are transported away from the fiberising rotors 1, 2, 3, 4 to a collecting means (not shown).

If needed the rotating speed of the fiberising rotors 1, 2, 3, 4 may also be altered. The rotating directions of the rotors 1, 2, 3, 4 have been indicated in figure 1 with arrows. Around the fiberising apparatus 10 has been arranged application means 6 for binder, which is applied to the formed fibres through nozzle openings 7, 7', 7".

Even if the invention was described with reference to what is presently considered to be the most practical and preferred embodiments, it must be understood that the invention shall not be limited to the above-described embodiments, but that it is intended to include also different modifications and equivalent technical solutions within the scope of the enclosed claims.

## Claims

1. A method for optimising a manufacturing process of mineral fibres, in which method
- mineral melt is fed in the form of a melt jet to a fiberising apparatus, which comprises a number of rotating fiberising rotors, which are rotated by motor means, whereby the melt is fed to a first rotor of the fiberising apparatus towards an application point on the first rotor's mantle surface,
- the feeding of the mineral melt to the first rotor is monitored by a monitoring means, such as a camera, in order to obtain feeding information,
- a part of the mineral melt is thrown out from the mantle surface of the first rotor in the form of a drop cascade towards a mantle surface of a second rotor,
- a first part of mineral melt is formed into fibres at the second rotor and is blown off from the rotor by blow-off means, and a second part of mineral melt is thrown out from the second rotor in the form of a drop cascade towards a third rotor, where at least a part of it is formed into fibres and is blown off by blow-off means, **characterised in**
- measuring slip of at least two of the motor means of the fiberising rotors of the fiberising apparatus, which slip is a quantity indicating the difference between the motor frequency and the rotor frequency,
- comparing the measured slip values to each other in order to obtain one or more melt division value(s), which melt division value gives information about how the mineral melt is distributed between at least two of the fiberising rotors in a fiberising apparatus,
- using the melt division value(s) together with the feeding information for altering or adjusting at least one of the process parameters of the fiberising apparatus, whereby the application point of the melt jet on the mantle surface of the first rotor is altered based on the obtained feeding information and melt division value(s), or the rotating speed of one or more fiberising rotors and/or the blow-off speed of one or more blow-off means is altered based on the obtained feeding information and melt division value(s).

2. The method according to claim 1, **characterised in that** the slip of the motor means is measured at the first and the fourth rotor.

3. The method according to claim 1, **characterised in that** the slip of the motor means is measured at all the rotors of the fiberising apparatus.

4. The method according to claim 1, **characterised in that** the mineral melt removed from the lower part of the fiberising apparatus in the form of shot is monitored in order to obtain shot information, which is then used for altering or adjusting one or more fiberising parameters.

5. The method according to claim 1, **characterised in that** the thickness of the collected primary web is monitored in order to obtain information, which is then used for altering or adjusting one or more fiberising parameters.

## Patentansprüche

1. Verfahren zum Optimieren eines Herstellungsverfahrens von Mineralfasern, wobei bei dem Verfahren
- eine Mineralschmelze in der Form eines geschmolzenen Strahls zu einer Zerfaserungsvorrichtung geführt wird, welche etliche sich drehende Zerfaserungsrotoren umfasst, welche von Motormitteln gedreht werden, wobei die Schmelze zu einem ersten Rotor der Zerfaserungsvorrichtung in Richtung eines Einsatzpunktes an einer Mantelfläche des ersten Rotors geführt wird,
- das Zuführen der Mineralschmelze zu dem ersten Rotor von einem Beobachtungsmittel, wie z.B. einer Kamera, beobachtet wird, um eine Zuführungsinformation zu erhalten,
- ein Teil der Mineralschmelze von der Mantelfläche des ersten Rotors in der Form einer Tropfenkaskade in Richtung einer Mantelfläche eines zweiten Rotors ausgeworfen wird,
- ein erster Teil der Mineralschmelze an dem zweiten Rotor in Fasern geformt wird und von dem Rotor mittels Ausblasmitteln ausgeblasen wird und ein zweiter Teil der Mineralschmelze von dem zweiten Rotor in der Form einer Tropfenkaskade in Richtung eines dritten Rotors ausgeworfen wird, wobei zumindest ein Teil davon in Fasern geformt wird und mittels Ausblasmitteln ausgeblasen wird,
**gekennzeichnet durch**
- Messen von Schlupf an mindestens zwei der Rotormitteln der Zerfaserungsrotoren der Zerfaserungsvorrichtung, wobei der Schlupf eine Größe ist, welche den Unterschied zwischen der Motorfrequenz und der Rotorfrequenz anzeigt,
- Vergleichen der gemessenen Schlupfwerte miteinander, um einen oder mehrere Schmelzteilungswert(e) zu erhalten, wobei der Schmelzteilungswert eine Information darüber gibt, wie die Mineralschmelze zwischen mindestens zwei der Zerfaserungsrotoren in einer Zerfaserungsvorrichtung verteilt wird,
- Verwenden des (der) Schmelzteilungswert(e) zusammen mit der Zuführungsinformation zum Ändern oder Einstellen von mindestens einem der Prozessparameter von der Zerfaserungsvorrichtung, wobei der Einsatzpunkt des Schmelzstrahls auf der Mantelfläche des ersten Rotors basierend auf der erhaltenen Zuführungsinformation und dem (der) Schmelzteilungswert(e) geändert wird oder die Drehgeschwindigkeit von einem oder mehreren Zerfaserungsrotoren und/oder die Ausblasgeschwindigkeit von einem oder mehreren Ausblasmitteln basierend auf der erhaltenen Zuführungsinformation und dem (der) Schmelzteilungswert(e) geändert wird.

2. Verfahren nach Anspruch 1, **dadurch gekennzeichnet, dass** der Schlupf des Motormittels an dem ersten und dem vierten Rotor gemessen wird.

3. Verfahren nach Anspruch 1, **dadurch gekennzeichnet, dass** der Schlupf des Motormittels an allen Rotoren der Zerfaserungsvorrichtung gemessen wird.

4. Verfahren nach Anspruch 1, **dadurch gekennzeichnet, dass** die Mineralschmelze, welche von dem unteren Teil der Zerfaserungsvorrichtung in der Form von Ausschuss entfernt wird, beobachtet wird, um eine Ausschussinformation zu erhalten, welche dann zum Ändern oder Einstellen von einem oder mehreren Zerfaserungsparametern verwendet wird.

5. Verfahren nach Anspruch 1, **dadurch gekennzeichnet, dass** die Dicke des gesammelten Primärgewebes beobachtet wird, um eine Information zu erhalten, welche dann zum Ändern oder Einstellen von einem oder mehreren Zerfaserungsparametern verwendet wird.

## Revendications

1. Procédé d'optimisation d'un processus de fabrication de fibres minérales, méthode dans laquelle
- de la matière fondue minérale est fournie sous la forme d'un jet de matière fondue à un appareil de fibrage, qui comprend un certain nombre de rotors de fibrage en rotation, qui sont mis en rotation par un moyen de moteur, moyennant quoi la matière fondue est fournie au premier rotor de l'appareil de fibrage vers un point d'application sur la surface du manteau du premier rotor,
- la fourniture de la matière fondue minérale au premier rotor est surveillée par un moyen de surveillance, tel qu'une caméra, afin d'obtenir des informations de fourniture,
- une partie de la matière fondue minérale est expulsée de la surface du manteau du premier rotor sous la forme d'une chute en cascade vers une surface de manteau d'un deuxième rotor,
- une première partie de la matière fondue minérale est formée en fibres au niveau du deuxième rotor et est évacuée par soufflage du rotor par un moyen d'évacuation par soufflage, et une seconde partie de la matière fondue minérale est expulsée du deuxième rotor sous la forme d'une chute en cascade vers un troisième rotor, où au moins une partie en est formée en fibres et est évacuée par soufflage par un moyen d'évacuation par soufflage, **caractérisé par**
- la mesure du glissement d'au moins deux des moyens de rotor des rotors de fibrage de l'appareil de fibrage, lequel glissement est une quantité indiquant la différence entre la fréquence de moteur et la fréquence de rotor,
- la comparaison des valeurs de glissement mesurées les unes aux autres afin d'obtenir une ou plusieurs valeur(s) de division de matière fondue, laquelle valeur de division de matière fondue donne une information à propos de la manière dont la matière fondue minérale est répartie entre au moins deux des rotors de fibrage dans un appareil de fibrage,
- l'utilisation de la (des) valeur(s) de division de matière fondue conjointement avec les informations de fourniture pour modifier ou ajuster au moins un des paramètres du processus de l'appareil de fibrage, moyennant quoi le point d'application du jet de matière fondue sur la surface du manteau du premier rotor est modifié d'après les informations de fourniture obtenues et la ou les valeur(s) de division de matière fondue, ou la vitesse de rotation d'un ou plusieurs rotors de fibrage et/ou la vitesse d'évacuation par soufflage d'un ou plusieurs moyens d'évacuation par soufflage est modifiée d'après les informations de fourniture obtenues et la ou les valeur(s) de division de matière fondue.

2. Méthode selon la revendication 1, **caractérisée en ce que** le glissement du moyen de moteur est mesuré au niveau du premier et du quatrième rotor.

3. Méthode selon la revendication 1, **caractérisée en ce que** le glissement du moyen de moteur est mesuré au niveau de tous les rotors de l'appareil de fibrage.

4. Méthode selon la revendication 1, **caractérisée en ce que** la matière fondue minérale éliminée de la partie inférieure de l'appareil de fibrage sous la forme de grenaille est surveillée afin d'obtenir des informations de grenaille qui sont ensuite utilisées pour modifier ou ajuster un ou plusieurs paramètres de fibrage.

5. Méthode selon la revendication 1, **caractérisée en ce que** l'épaisseur du voile primaire collecté est surveillée afin d'obtenir de l'information, qui est ensuite utilisée pour modifier ou ajuster un ou plusieurs paramètres de fibrage.
